# EUROPEAN PATENT APPLICATION

(11) **EP 4 560 387 A1**
(43) Date of publication of application: **28.05.2025**
(21) Application number: 23842860.1
(22) Date of filing: 07.07.2023
(51) Int. Cl.: G02F 1/01, G02B 6/12, G02B 6/122, G02B 6/42, G02F 1/025

(54) **OPTICAL MODULATOR AND OPTICAL TRANSCEIVER**

(30) Priority: 21.07.2022 JP 2022116739
(71) Applicant: Kyocera Corporation, Kyoto-shi, Kyoto 612-8501 (JP)
(72) Inventor: ISHIKAWA, Satoshi, Kyoto-shi, Kyoto 612-8501 (JP); YOSHIKAWA, Hiromichi, Kyoto-shi, Kyoto 612-8501 (JP)
(74) Representative: Viering, Jentschura & Partner mbB Patent- und Rechtsanwälte
(86) International application number: PCT/JP2023/025334
(87) International publication number: WO 2024/018935

(57) **Abstract**

An optical modulator includes: a substrate; a coplanar line, on the substrate, including a first ground wire, a second ground wire, and a signal wire, between the first ground wire and the second ground wire, coupled to each of the first ground wire and the second ground wire; a waveguide, between the first ground wire and the signal wire along the coplanar line on the substrate in plan view of the substrate, including an input portion and an output portion for an optical signal, the output portion configured to output an optical signal input from the input portion and modulated using a signal that propagates along the coplanar line; and an adjustment member, between the second ground wire and the signal wire along the coplanar line on the substrate in plan view of the substrate, not including an input portion or an output portion for an optical signal.

## Description

### CROSS-REFERENCE TO RELATED APPLICATIONS

This application claims priority of Japanese Patent Application No. 2022-116739 (filed July 21, 2022), the entire disclosure of which is hereby incorporated by reference.

### TECHNICAL FIELD

The present disclosure relates to an optical modulator and an optical transceiver.

### BACKGROUND OF INVENTION

In a known structure, a single optical waveguide is positioned between one of the ground wires and a common signal wire of a coplanar line, whereas no optical waveguide is positioned between the other ground wire and the common signal wire of the coplanar line (for example, refer to Fig. 1A of Non Patent Literature 1).

### CITATION LIST

### NON PATENT LITERATURE

Non Patent Literature 1: Jianfeng Ding, Hongtao Chen, Lin Yang, Lei Zhang, Ruiqiang Ji, Yonghui Tian, Weiwei Zhu, Yangyang Lu, Ping Zhou, Rui Min, and Mingbin Yu, Ultra-low-power carrier-depletion Mach-Zehnder silicon optical modulator, Optics Express, Vol. 20, No. 7 (2012)

### SUMMARY

In an embodiment of the present disclosure, an optical modulator includes a substrate, a coplanar line, a waveguide, and an adjustment member. The coplanar line is positioned on the substrate and includes a first ground wire, a second ground wire, and a signal wire. The signal wire is positioned between the first ground wire and the second ground wire and is coupled to each of the first ground wire and the second ground wire. The waveguide is positioned between the first ground wire and the signal wire along the coplanar line on the substrate in plan view of the substrate. The waveguide includes an input portion and an output portion for an optical signal. The output portion is configured to output an optical signal input from the input portion and modulated by a signal propagating along the coplanar line. The adjustment member is positioned between the second ground wire and the signal wire along the coplanar line on the substrate in plan view of the substrate. The adjustment member does not include an input portion or an output portion for an optical signal.

In an embodiment of the present disclosure, an optical transceiver includes an optical modulator and a light source. The light source is configured to input an optical signal to the optical modulator. The optical modulator includes a substrate, a coplanar line positioned on the substrate, a waveguide, and an adjustment member. The coplanar line includes a first ground wire, a second ground wire, and a signal wire. The signal wire is positioned between the first ground wire and the second ground wire and is coupled to each of the first ground wire and the second ground wire. The waveguide is positioned between the first ground wire and the signal wire along the coplanar line on the substrate in plan view of the substrate. The waveguide includes an input portion and an output portion for an optical signal. The output portion is configured to output an optical signal input from the input portion and modulated by a signal propagating along the coplanar line. The adjustment member is positioned between the second ground wire and the signal wire along the coplanar line on the substrate in plan view of the substrate. The adjustment member does not include an input portion or an output portion for an optical signal.

### BRIEF DESCRIPTION OF THE DRAWINGS

FIG. 1 is a plan view illustrating an example configuration of an optical modulator according to an embodiment.
FIG. 2 is a sectional view taken along line A-A in FIG. 1.
FIG. 3 is a graph illustrating the frequency characteristics of the S parameters of an optical modulator according to a comparative example.
FIG. 4 is a graph illustrating an example of the frequency characteristics of the S parameters of the optical modulator according to this embodiment.
FIG. 5 is a plan view illustrating an example configuration in which an adjustment member is divided into parts and then disposed.
FIG. 6 is a graph illustrating an example of the relationship between the filling ratio of an adjustment member and the effective refractive index of a coplanar line.
FIG. 7 is a sectional view taken along line B-B in FIG. 5.
FIG. 8 is a block diagram illustrating an example configuration of an optical transceiver according to an embodiment.

### DESCRIPTION OF EMBODIMENTS

When an optical waveguide is positioned at the side of one ground wire and not at the side of another ground wire in a coplanar line, the propagation efficiency of an optical signal propagating in the optical waveguide will decrease due to resonance. The propagation efficiency of optical signals in optical waveguides needs to be improved. In an embodiment of the present disclosure, an optical modulator and an optical transceiver can have improved propagation efficiency for optical signals.

### (Example Configuration of Optical Modulator 10)

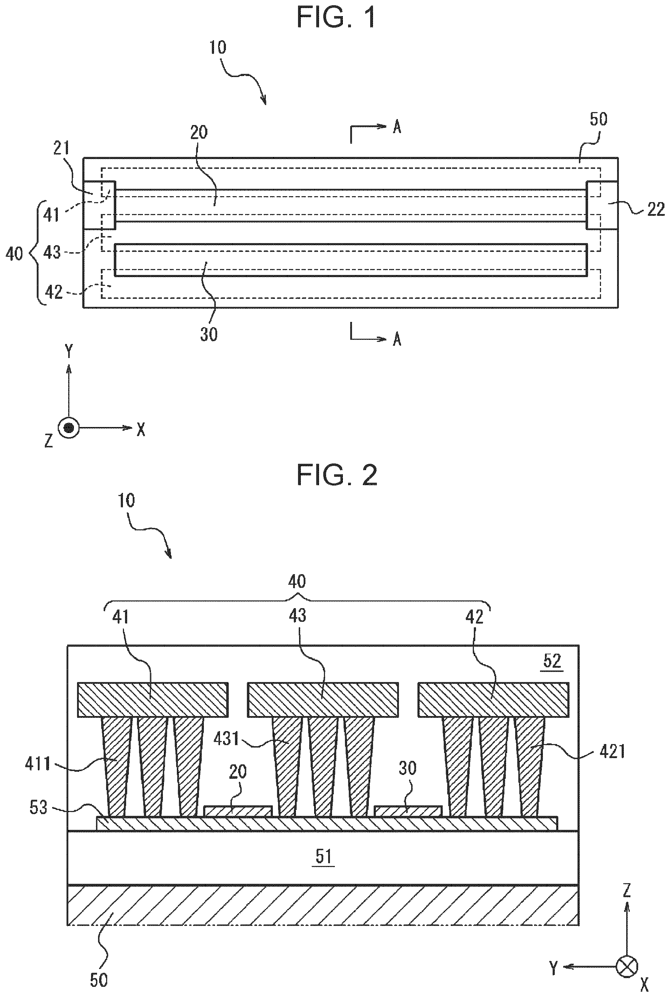

As illustrated in FIGs. 1 and 2, in an embodiment, an optical modulator 10 includes a coplanar line 40, a waveguide 20, an adjustment member 30, and a substrate 50. The optical modulator 10 is assumed to be held by the substrate 50. The optical modulator 10 further includes a first dielectric layer 51 and a second dielectric layer 52 positioned on the substrate 50. The optical modulator 10 further includes a semiconductor layer 53 positioned on the first dielectric layer 51.

The coplanar line 40 includes a first ground wire 41 and a second ground wire 42, which are grounded, and a signal wire 43 to which an electrical signal is input. The first ground wire 41, the second ground wire 42, and the signal wire 43 extend in an X-axis direction. The first ground wire 41 is electrically connected to the semiconductor layer 53 through via wiring lines 411. The second ground wire 42 is electrically connected to the semiconductor layer 53 through via wiring lines 421. The signal wire 43 is electrically connected to the semiconductor layer 53 through via wiring lines 431. The first ground wire 41, the second ground wire 42, and the signal wire 43 are insulated from each other by the second dielectric layer 52. The signal wire 43 is positioned between the first ground wire 41 and the second ground wire 42. The signal wire 43 is electrically coupled to each of the first ground wire 41 and the second ground wire 42.

The waveguide 20 extends in the X-axis direction on the semiconductor layer 53. The waveguide 20 is electrically connected to the semiconductor layer 53. The waveguide 20 is positioned between the first ground wire 41 and the signal wire 43 of the coplanar line 40. The waveguide 20 is electrically connected to the first ground wire 41 on the positive Y-axis direction side and is electrically connected to the signal wire 43 on the negative Y-axis direction side in a sectional view (see FIG. 2) taken along a plane (YZ plane) perpendicular to the direction in which the waveguide 20 extends (X-axis direction). As a result, an electrical signal between the signal wire 43 and the first ground wire 41 is applied to the waveguide 20 in a direction that intersects the waveguide 20 in the direction in which the waveguide 20 extends (X-axis direction).

The waveguide 20 includes an input portion 21 and an output portion 22. An optical signal input from the input portion 21 propagates through the waveguide 20 and is output from the output portion 22. The optical signal is affected by the electrical signal applied to the waveguide 20 by the first ground wire 41 and the signal wire 43 while propagating through the waveguide 20, which is positioned between the first ground wire 41 and the signal wire 43. The amplitude of the optical signal changes due to the effect of the electrical signal while the optical signal propagates through the waveguide 20. In other words, the optical signal is modulated by the electrical signal propagating along the coplanar line 40 and is then output from the output portion 22.

The adjustment member 30 extends in the X-axis direction on the semiconductor layer 53. The adjustment member 30 may be electrically connected to the semiconductor layer 53 or insulated from the semiconductor layer 53. The adjustment member 30 is positioned between the second ground wire 42 and the signal wire 43 of the coplanar line 40.

In this embodiment, the substrate 50 is assumed to contain silicon (Si), but is not limited to this material and may contain another semiconductor material such as GaAs. The substrate 50 may contain a conductor such as metal or a dielectric such as glass or resin. The substrate 50 may contain various other materials, not limited to these examples.

The first dielectric layer 51 is assumed to contain a silicon oxide film (SiO₂), but may also contain various other dielectric or insulating materials.

The second dielectric layer 52 is assumed to contain a silicon oxide film (SiO₂), but may also contain various other dielectric or insulating materials. The second dielectric layer 52 may contain a gas such as air, or may be configured as a vacuum.

The semiconductor layer 53 is assumed to contain silicon (Si). The semiconductor layer 53 may contain a material obtained by injecting a dopant into a semiconductor. The semiconductor layer 53 may be replaced with a layer of a conductor such as a metal.

The first ground wire 41, the second ground wire 42, and the signal wire 43 may contain a metal such as aluminum, but are not limited to this material and may contain various conductor materials. The via wiring lines 411, 421, and 431 may contain a metal such as tungsten, but are not limited to this material, and may contain various other conductor materials.

The waveguide 20 and the adjustment member 30 are assumed to contain silicon (Si), but are limited to this material and may contain various other dielectric materials. The waveguide 20 and the adjustment member 30 may contain the same material as each other or different materials.

Part of the waveguide 20 is surrounded by the second dielectric layer 52. The material of the waveguide 20 is assumed to be determined so that the relative dielectric constant of the waveguide 20 is greater than the relative dielectric constant of the second dielectric layer 52. In other words, the materials of the waveguide 20 and the second dielectric layer 52 are determined so that the refractive index of the second dielectric layer 52 is greater than the refractive index of the waveguide 20. As a result, an optical signal propagating in the waveguide 20 can be totally reflected at the boundary with the second dielectric layer 52. As a result, loss of the optical signal propagating in the waveguide 20 can be reduced.

The waveguide 20 is configured so that the signal wire 43 and the first ground wire 41 are not short-circuited by the waveguide 20. In other words, the waveguide 20 may be configured so that the resistance value between the side that is connected to the signal wire 43 via the via wiring lines 431 and the semiconductor layer 53 and the side that is connected to the first ground wire 41 via the via wiring lines 411 and the semiconductor layer 53 is equal to or greater than a prescribed value. The resistance value may be adjusted, for example, by changing the dopant density of the semiconductor contained in the waveguide 20, or by changing the electrical resistance between the waveguide 20 and the coplanar line 40.

In this embodiment, the waveguide 20 is assumed to include an n-type semiconductor positioned on the side connected to the signal wire 43 and a p-type semiconductor positioned on the side connected to the first ground wire 41. The n-type semiconductor and the p-type semiconductor extend along the direction in which the waveguide 20 extends (X-axis direction), and are positioned side by side in a direction that intersects the direction in which the waveguide 20 extends (Y-axis direction). The waveguide 20 includes a pn junction in which an n-type semiconductor and a p-type semiconductor are bonded to each other. The pn junction part is positioned along the direction (X-axis direction) in which the waveguide 20 extends. The waveguide 20 is configured so that the bias is a reverse direction bias when a positive potential with respect to the ground potential of the first ground wire 41 is applied to the signal wire 43 due to the presence of the pn junction. As a result, the waveguide 20 is configured so that a short-circuit does not occur between the signal wire 43 and the first ground wire 41 when the potential of the signal wire 43 is a positive potential with respect to the ground potential of the first ground wire 41.

The adjustment member 30 may be configured to include the same pn junction as the waveguide 20, or may be configured using just an n-type semiconductor, a p-type semiconductor, or an intrinsic semiconductor.

### (Control of Resonance Frequency in Optical Modulator 10)

As described above, the optical modulator 10 modulates the light input from the input portion 21 to the waveguide 20 by applying an electrical signal to the coplanar line 40, and then outputs the modulated light from the output portion 22. If a line made up of pair of wires consisting of one ground wire and one signal wire is used instead of the coplanar line 40, the signal radiation will be greater. In this embodiment, the optical modulator 10 can reduce signal radiation by using the coplanar line 40. In other words, signal loss can be reduced by using the coplanar line 40.

The propagation characteristics of the waveguide 20 of the optical modulator 10 are expressed as the frequency characteristics of S parameters (scattering parameters). The S parameters of the waveguide 20 include S12 representing the ratio of light transmitted from the input portion 21 to the output portion 22, and S11 representing the ratio of light input to the input portion 21, reflected within the waveguide 20, and returning to the input portion 21. In other words, the S parameters of the waveguide 20 include the transmittance and reflectance of the light input to the waveguide 20.

Out of the light propagating in the waveguide 20, light of a prescribed frequency may resonate inside the waveguide 20 and experience significant loss. The prescribed frequency at which light resonates is also referred to as the resonance frequency. The resonance frequency changes in accordance with the shape of the waveguide 20. For example, the longer the line length of the waveguide 20, the lower the resonance frequency of the waveguide 20.

The waveguide 20 can be expressed by an equivalent circuit that includes a capacitor and an inductor. The resonance frequency of the waveguide 20 can be assigned to the equivalent circuit of the waveguide 20. The equivalent circuit of the waveguide 20 is affected by the arrangement of electrodes or dielectrics around the waveguide 20. Therefore, the resonance frequency changes depending on the arrangement of the electrodes or dielectrics around the waveguide 20.

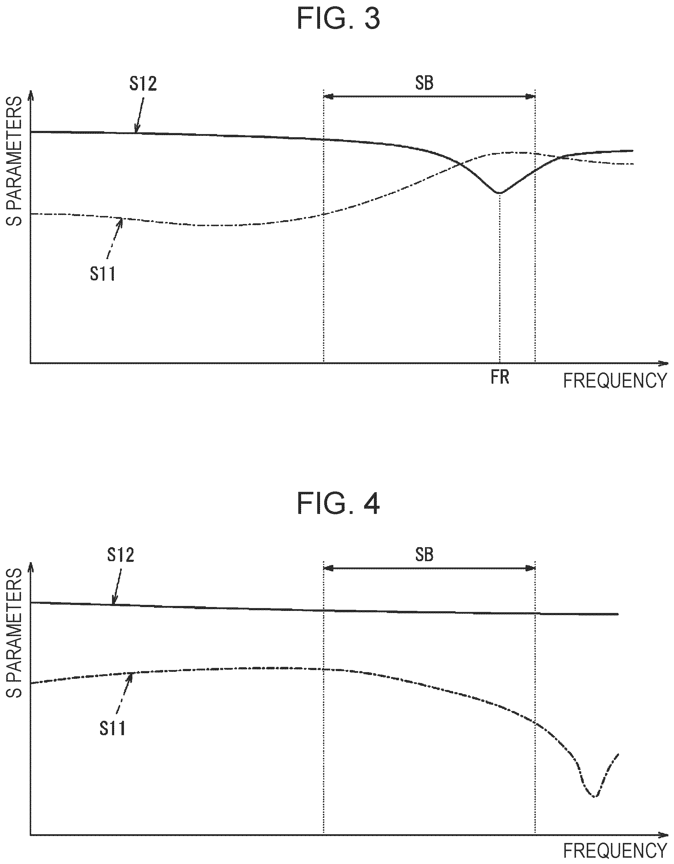

As a comparative example, an optical modulator is assumed in which the waveguide 20 is positioned between the first ground wire 41 and the signal wire 43, but not between the second ground wire 42 and the signal wire 43. An example of a graph of the frequency characteristics of the S parameters of the waveguide 20 for this case is illustrated in FIG. 3. In the graph in FIG. 3, the horizontal axis represents the frequency of an optical signal propagating in the waveguide 20. The vertical axis represents the values of S11 and S12. The value of S12 is a minimum at the resonance frequency represented by FR. In other words, the transmittance of the signal at the resonance frequency is low. Here, SB represents the frequency band of an electrical signal input to the signal wire 43 in order to modulate the optical signal in the optical modulator. If the resonance frequency (FR) is within the frequency band (SB) of the electrical signal input to signal wire 43, the loss of part of the signal modulated by the optical modulator will be large. As a result, the propagation characteristics of the optical modulator will deteriorate.

On the other hand, in this embodiment, the optical modulator 10 includes the adjustment member 30 positioned between the second ground wire 42 and the signal wire 43. An example of a graph of the frequency characteristics of the S parameters of the waveguide 20 for this case is illustrated in FIG. 4. In the graph in FIG. 4, the horizontal axis represents the frequency of an optical signal propagating in the waveguide 20. The vertical axis represents the values of S11 and S12. The value of S12 does not have a minimum value within the frequency band (SB) of the electrical signal input to the signal wire 43. In other words, in the optical modulator 10 according to this embodiment, no resonance occurs at least within the frequency band (SB) of the electrical signal. Therefore, the loss of the signal modulated by the optical modulator 10 according to this embodiment is less than the loss of the signal modulated by the optical modulator according to the comparative example. As a result, the propagation characteristics of the signal modulated in the optical modulator 10 according to this embodiment can be improved.

As described above, in this embodiment, the optical modulator 10 can maintain the transmittance of a modulated signal at a high value within the frequency band (SB) of the electrical signal input to the signal wire 43 due to the optical modulator 10 including the adjustment member 30 located between the second ground wire 42 and the signal wire 43. As a result, the propagation characteristics of the modulated signal can be improved.

In addition, in the optical modulator 10 according to this embodiment, the adjustment member 30 does not include input/output portions for optical signals. Specifically, the adjustment member 30 does not include parts corresponding to the input portion 21 and the output portion 22 of the waveguide 20. If the adjustment member 30 is assumed to include input/output portions for optical signals, the coupling between the waveguide 20 and the adjustment member 30 can be strengthened. As a result of the coupling between the waveguide 20 and the adjustment member 30 being strengthened, the effect of the adjustment member 30 on the optical signal propagating in the waveguide 20 can become greater. On the other hand, the adjustment member 30 of the optical modulator 10 according to this embodiment does not include input/output portions for optical signals, and therefore the coupling between the waveguide 20 and the adjustment member 30 can be weakened. Due to the weakening of the coupling between the waveguide 20 and the adjustment member 30, the effect of the adjustment member 30 on the optical signal propagating in the waveguide 20 can become smaller. The characteristics of the optical signal modulated in the waveguide 20 can be maintained by reducing the effect of the adjustment member 30. As a result, the propagation characteristics of the modulated signal can be improved. In addition, the length of the adjustment member 30 is restricted by the adjustment member 30 including input/output portions for optical signals. As described below, the length of the adjustment member 30 can be adjusted because the adjustment member 30 does not include input/output portions for optical signals.

### (Control of Effective Refractive Index in Optical Modulator 10)

In the optical modulator 10, an optical signal propagates along the waveguide 20, and an electrical signal propagates along the coplanar line 40. In order to efficiently modulate the optical signal using the electrical signal, the propagation speed of the electrical signal in the coplanar line 40 needs to be matched to the propagation speed of the optical signal in the waveguide 20. In order to match the propagation speed of the electrical signal to the propagation speed of the optical signal, the difference between the effective refractive index of the waveguide 20 and the effective refractive index of the coplanar line 40 needs to be made small.

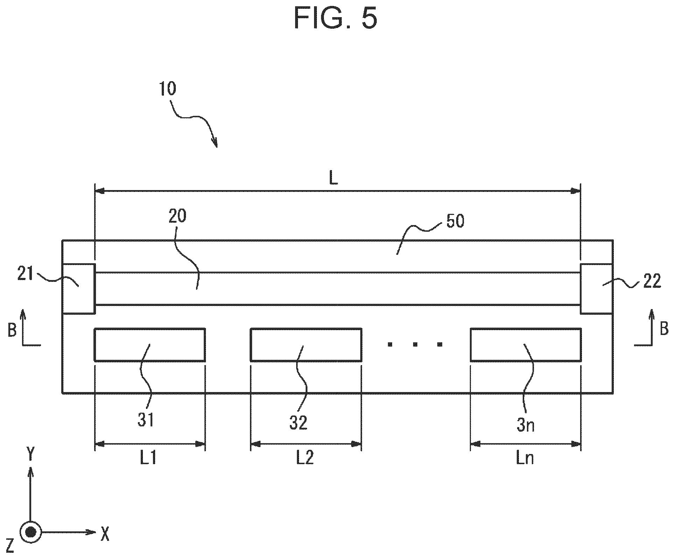

The effective refractive index of the coplanar line 40 can be adjusted by changing the length of the adjustment member 30 in the extension direction thereof (X-axis direction). As illustrated in FIG. 5, the length of the adjustment member 30 in the extension direction thereof (X-axis direction) can be adjusted by dividing the adjustment member 30 into multiple parts. In FIG. 5, the adjustment member 30 includes an adjustment member 31, an adjustment member 32, ..., and an adjustment member 3n, which are obtained by dividing the adjustment member 30 into n pieces. The adjustment member 30 may be shortened without being divided and left as a single adjustment member 30.

The effective refractive index of the coplanar line 40 is determined in accordance with the ratio of the length of the adjustment member 30 to the length of the waveguide 20. The ratio of the length of the adjustment member 30 to the length of the waveguide 20 is also referred to as the filling ratio of the adjustment member 30. The filling ratio is calculated by dividing the total length of the adjustment member 30 by the length of the waveguide 20. The length of the waveguide 20 is represented by L. The respective lengths of the n adjustment members 30 are represented by lengths L1, L2, ..., and Ln. In this case, the filling ratio of the adjustment members 30 is calculated as (L1 + L2 + ... + Ln)/L. When one adjustment member 30 is shortened, the filling ratio of the adjustment member 30 is calculated by dividing the length of the shortened adjustment member 30 by the length of the waveguide 20.

When the adjustment member 30 is divided along a plane perpendicular to the extension direction thereof, the lengths of each part of the divided adjustment member 30 is the same as the length in the extension direction. When the adjustment member 30 is divided along a plane that is tilted from a plane perpendicular to the extension direction of the adjustment member 30, the length of each part of the divided adjustment member 30 may be calculated as the length in the extension direction in an orthographic projection on the waveguide 20.

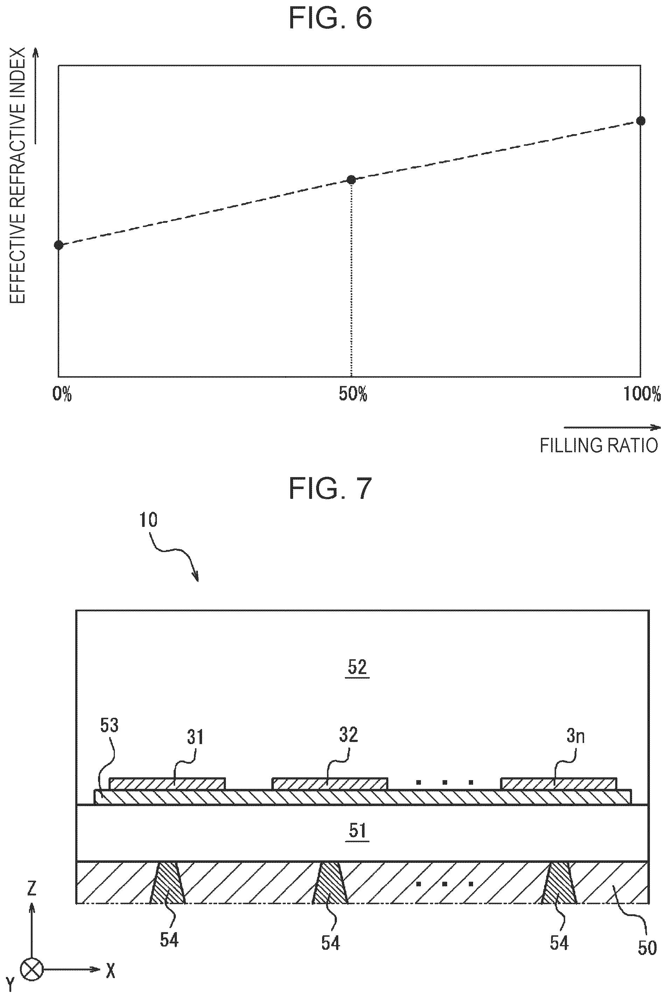

FIG. 6 illustrates, as a graph, the relationship between the filling ratio of the adjustment member 30 and the effective refractive index of the coplanar line 40. In the graph in FIG. 6, the horizontal axis represents the filling ratio of the adjustment member 30. The vertical axis represents the effective refractive index of the coplanar line 40. The smaller the filling ratio of the adjustment member 30, the lower the effective refractive index of the coplanar line 40. Therefore, the filling ratio of the adjustment member 30 can be adjusted so that the effective refractive index of the coplanar line 40 comes close to the effective refractive index of the waveguide 20.

The total length of the adjustment member 30 (filling ratio of the adjustment member 30) can affect the resonance frequency of the optical signal in the waveguide 20. The total length of the adjustment member 30 in the direction along the coplanar line 40 (filling ratio of the adjustment member 30) may be set so that the resonance frequency of the optical signal propagating in the waveguide 20 is higher than the frequency band (SB) of the electrical signal propagating in the signal wire 43. Thus, the loss of the signal modulated in accordance with the electrical signal is reduced. As a result, the propagation characteristics of the signal modulated in the optical modulator 10 can be improved.

When the adjustment member 30 is divided into multiple parts, the effect of the arrangement, in the X-axis direction, of each divided part on the effective refractive index of the coplanar line 40 is small. Therefore, each divided part of the adjustment member 30 may be freely disposed at positions in the X-axis direction.

As illustrated in FIG. 7, the optical modulator 10 may further include temperature adjusting portions 54. The temperature adjusting portions 54 may be positioned inside or below the substrate 50. The characteristics of the waveguide 20 or the coplanar line 40 may be affected by the temperature of the substrate 50. Therefore, the characteristics of the optical modulator 10 may be stabilized by adjusting the temperature of the substrate 50 using the temperature adjusting portions 54.

The temperature adjusting portions 54 may include a heat sink, for example. The temperature adjusting portions 54 may include a heater that heats the substrate 50. The temperature adjusting portions 54 may include a cooling water pipe that cools the substrate 50. The temperature adjusting portions 54 may include piping that circulates water at a prescribed temperature to control the temperature of the substrate 50 to a prescribed temperature.

In the optical modulator 10, the adjustment member 30 can absorb part of the optical signal propagating through the waveguide 20 and generate heat. As least some of the divided parts of the adjustment member 30 may be disposed to overlap the temperature adjusting portions 54 in plan view of the substrate 50 (when the substrate 50 is viewed in the positive Z-axis direction), as illustrated in FIG. 7. In this way, the temperature of the substrate 50 is easily adjusted. As a result, the characteristics of the optical modulator 10 can be stabilized.

### (Summary)

As described above, in this embodiment, the optical modulator 10 includes the adjustment member 30 in addition to the waveguide 20 positioned along the coplanar line 40, and this allows the resonance frequency of the waveguide 20 to be adjusted to a frequency outside the frequency band of an electrical signal (frequency band of modulated optical signal). As a result, the propagation characteristics of the signal modulated in the optical modulator 10 can be improved.

### (Example Configuration of Optical Transceiver 100)

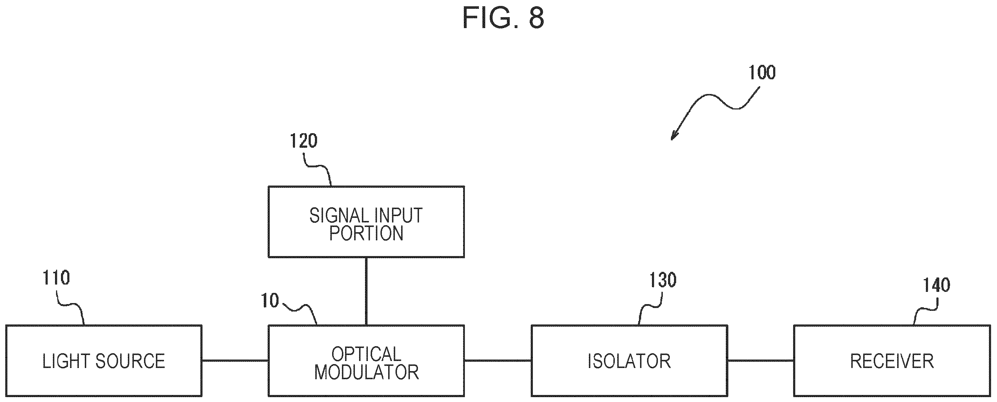

The optical modulator 10 may be used in combination with a configuration for transmitting and receiving light. As illustrated in FIG. 8, the optical transceiver 100 includes the optical modulator 10, a light source 110, a signal input portion 120, and an isolator 130. The optical transceiver 100 inputs an optical signal from the light source 110 to the optical modulator 10, modulates the light based on a signal input to the signal input portion 120 using the optical modulator 10, and outputs the modulated light from the optical modulator 10 to a receiver 140 via the isolator 130. The isolator 130 is configured so that the transmittance of the optical signal propagating from the light source 110 to the receiver 140 is greater than the transmittance of the optical signal propagating from the receiver 140 to the light source 110. Therefore, optical signals will be less likely to enter the light source 110. As a result, the light source 110 can be protected.

The light source 110 may include, for example, a semiconductor laser such as an LD (laser diode) or a VCSEL (vertical cavity surface emitting laser). The light source 110 may include a device that emits optical signals of various wavelengths, not limited to visible light. The light source 110 may be formed together with the optical modulator 10 on the substrate 50.

The optical modulator 10 modulates the light by changing the intensity of the light input from the light source 110 to the waveguide 20 in accordance with a signal input from the signal input portion 120 to the signal wire 43 of the coplanar line 40. The optical modulator 10 may be positioned between the isolator 130 and the receiver 140, rather than between the light source 110 and the isolator 130. The optical modulator 10 may pulse-modulate the optical signal, for example. The signal input portion 120 accepts input of signals from external devices, etc. The signal input portion 120 may include a D/A converter, for example. The signal input portion 120 outputs a signal to the signal wire 43 of the coplanar line 40 of the optical modulator 10.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions included in each component can be rearranged in a logically consistent manner, and a plurality of components can be combined into a single component or a single component can be divided into a plurality of components. Please understand that the scope of the present disclosure also includes these forms.

In the present disclosure, "first", "second", and so on are identifiers used to distinguish between such configurations. Regarding the configurations, "first", "second", and so on used to distinguish between the configurations in the present disclosure may be exchanged with each other. For example, identifiers "first" and "second" may be exchanged between the first ground wire 41 and the second ground wire 42. Exchanging of the identifiers take places simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

In the present disclosure, the X-axis, the Y-axis, and the Z-axis are provided for convenience of explanation, but may be interchanged with each other. The configurations of the present disclosure have been described using a Cartesian coordinate system consisting of a X-axis, a Y-axis, and a Z-axis. The positional relationship of each configuration in the present disclosure is not limited to a Cartesian relationship.

### REFERENCE SIGNS

10 optical modulator
20 waveguide (21: input portion, 22: output portion)
30, 31, 32, 3n adjustment member
40 coplanar line (41: first ground wire, 42: second ground wire, 43: signal wire)
50 substrate (51, 52: dielectric layer, 53: semiconductor layer, 54: temperature adjusting portion)
100 optical transceiver (110: light source, 120: signal input portion, 130: isolator, 140: receiver)

## Claims

1. An optical modulator comprising:
a substrate;
a coplanar line positioned on the substrate and including a first ground wire, a second ground wire, and a signal wire positioned between the first ground wire and the second ground wire and coupled to each of the first ground wire and the second ground wire;
a waveguide positioned between the first ground wire and the signal wire along the coplanar line on the substrate in plan view of the substrate, and including an input portion and an output portion for an optical signal, the output portion configured to output an optical signal input from the input portion and modulated using a signal that propagates along the coplanar line; and
an adjustment member positioned between the second ground wire and the signal wire along the coplanar line on the substrate in plan view of the substrate, and not including an input portion or an output portion for an optical signal.

2. The optical modulator according to claim 1, wherein the adjustment member is shorter than the waveguide in a direction along the coplanar line.

3. The optical modulator according to claim 2, wherein the adjustment member is divided into multiple parts.

4. The optical modulator according to claim 3, further comprising:
a temperature adjusting portion positioned inside or below the substrate,
wherein at least part of the divided parts of the adjustment member is positioned overlapping the temperature adjusting portion in plan view of the substrate.

5. The optical modulator according to any one of claims 2 to 4, wherein a total length of the adjustment member in the direction along the coplanar line is set so that a resonance frequency of an optical signal propagating in the waveguide is higher than a frequency band of a signal propagating in the signal wire.

6. An optical transceiver comprising:
an optical modulator; and
a light source configured to input an optical signal to the optical modulator,
wherein the optical modulator includes
a substrate,
a coplanar line positioned on the substrate and including a first ground wire, a second ground wire, and a signal wire positioned between the first ground wire and the second ground wire and coupled to each of the first ground wire and the second ground wire,
a waveguide positioned between the first ground wire and the signal wire along the coplanar line on the substrate in plan view of the substrate, and including an input portion and an output portion for an optical signal, the output portion configured to output an optical signal input from the input portion and modulated using a signal that propagates along the coplanar line, and
an adjustment member positioned between the second ground wire and the signal wire along the coplanar line on the substrate in plan view of the substrate, and not including an input portion or an output portion for an optical signal.
